# EUROPEAN PATENT SPECIFICATION

(11) **EP 0 499 217 B1**
(45) Date of publication and mention of the grant of the patent: **03.01.1996**
(21) Application number: 92102285.1
(22) Date of filing: 12.02.1992
(51) Int. Cl.: G21C 17/022

(54) **A method and a device for quantitative electrochemical in situ measurements in water at high temperature**
Verfahren und Vorrichtung für quantitative in situ elektrochemische Messungen in Wasser bei hohen Temperaturen
Procédé et appareil pour des mesures électrochimiques quantitatifs in situ dans l'eau à haute température

(30) Priority: 14.02.1991 SE 9100463
(43) Date of publication of application: 19.08.1992
(73) Proprietor: ABB ATOM AB, S-721 83 Västeras (SE)
(72) Inventor: Wikmark, Gunnar, S-752 34 Uppsala (SE)
(74) Representative: Boecker, Joachim, Dr.-Ing.

(56) References cited:
- EP-A- 0 274 396
- EP-A- 0 417 571
- US-A- 4 831 324
- ELECTROCHEMICAL CORROSION TESTING. ASTM Special Technical Publication 727, editors F. Mansfeld & U. Bertocci, American Society for Testing and Materials, Philadelphia, PA, US; 1981, pages 110-149; D.D. MacDonald et al.: "Electrochemincal impedance techniques in corrosion science"

## Description

The invention relates to a method for quantitative electrochemical in situ measurements in water at high temperature according to the precharacterising part of claim 1. The invention also relates to a device to execute such measurements.

The method and the device are designed to quantitatively determine contents of dissolved molecules, ions or atoms in water of high temperature. More particularly, the invention relates to a method and a device for simultaneously determining contents of at least two dissolved molecules, ions or atoms. The invention is particularly useful for in situ measurements in circulation systems for water which is continuously monitored with respect to corrosive molecules, ions and atoms, such as circulation systems in heat-generating power plants.

In operation of nuclear power plants and other heat-generating power plants such as coal, oil and gas power plants, contents of molecules, ions and atoms (hereinafter referred to as molecules only), dissolved in the water, are monitored. Preferably, contents of molecules, which influence the corrosion of the construction materials included in the circulation system, are monitored. Of great importance are corrosion phenomena which give stress corrosion. Corrosion processes in circulation systems are monitored by continuous measurement of the electrochemical potential for construction materials included in the circulation system, as described in US-A-4 636 292. However, measurements of the electrochemical potential do not always give satisfactory or clearly interpretable results, and therefore it is desirable to monitor the contents of molecules dissolved in the water, such as oxygen,hydrogen peroxide, chloride, sulphate, organic acids, etc., which may influence the corrosion process in a circulation system. Such monitoring is especially desirable in circulation systems in nuclear power plants of boiler type with a so-called improved water chemistry - Alternate Water Chemistry, AWC, or Hydrogen Water Chemistry, HWC - where hydrogen gas is added to the water in order to suppress corrosion by increased recombination of radiolysis products.

It is of the utmost importance that such quantitative monitoring takes place in situ in the circulation system, since the possibilities of taking representative, reproducible samples for analysis outside the circulation system are small as a result of the molecules reacting and decomposing in a non-controllable or reproducible way in sample conduits.

During simultaneous monitoring of contents of at least two molecules by means of electrochemical measuring methods, where the content is determined based on the registration of kinetics, adsorption or the diffusion behaviour of the molecule on or near an electrode, it is difficult to find electrode pairs which are selectively sensitive to both kinds of molecules occurring.

The invention aims at developing a method of the above-mentioned kind for quantitative electrochemical in situ measurements in water at high temperature which enables easy distinction between two simultaneously measured contents of molecules.

To achieve this aim the invention suggests a method for quantitative electrochemical in situ measurements in water at high temperature according to the introductory part of claim 1, which is characterized by the features of the characterizing part of claim 1.

A further development of the method according to the invention are characterized by the features of claim 2.

A device for carrying out the method is characterized by the features of claim 3.

A further development of the device is characterized by the features of claim 4.

According to the invention two electrode pairs are arranged to simultaneously monitor or determine the contents of two molecules or ions, dissolved in the water, by means of an electrochemical measuring method starting from measurement of kinetics, adsorption or the diffusion behaviour for electrochemical reactions of the respective molecule/ion on or adjacent to a metal electrode, wherein the electrochemical reactions of said molecules/ions, according to the invention, are distinguished by arranging a first electrode pair consisting of metal electrodes made of an inert metal, preferably a metal such as gold or a platinum metal, and arranging a second electrode pair comprising a first metal electrode of inert metal and a second metal electrode. The second metal electrode is arranged with a surface layer such that the sensitivity to the reactions of the first molecule is essentially the same for both electrode pairs whereas the sensitivity to the reactions of the second molecule differs considerably between the electrode pairs. The surface layer on the second metal electrode influences kinetics, adsorption or the diffusion behaviour for an electrochemical reaction of the second molecule/ion.

By platinum metal is meant in this application both a metal belonging to the platinum group and alloys of two or more of these metals, such as platinum-rhodium. Platinum, Pt, is particularly preferred.

In one embodiment of the invention two electrode pairs are arranged for determining, by means of electrochemical impedance spectroscopy, the contents of oxygen and hydrogen peroxide in a circulation system of a boiling water nuclear power plant. The electrode pairs are chosen such that the sensitivity to the electrochemical reaction of the hydrogen peroxide, the hydrogen peroxide reduction, is essentially the same for both electrode pairs whereas the sensitivity to the electrochemical reaction of the oxygen, the oxygen gas reduction, differs considerably between the electrode pairs. This is achieved by arranging a first electrode pair with two electrodes of an inert metal, preferably in the form of two platinum electrodes, that is, a Pt-Pt electrode pair whereas in the second electrode pair the inert electrode, preferably a platinum electrode, is combined with a coated electrode, the coating being adapted to influence the reaction conditions for the oxygen gas reduction. By measuring according to this embodiment, contents of other molecules, such as sulphate and chloride, can also be determined at the same time by reaction conditions for the electrochemical reaction of one of the molecules being influenced by the coating. The coating on the coated electrode does not contribute to the electrochemical reaction but only influences the adsorption of the molecule on the electrode, the kinetics of the electrochemical reaction or diffusion which is of importance to the reaction.

The coating is preferably a natural oxide film, or an oxide film obtained by electrochemical methods, on an electrode of stainless steel or some other metal, but can also be achieved by surface coating by means of surface coating operations such as CVD - Chemical Vapour Deposition - or PVD - Physical Vapour Deposition - wherein an electrode of a platinum metal or other suitable metal is coated with a layer of, for example, coal.

In a preferred embodiment, in order to determine, by means of electrochemical impedance spectroscopy, the contents of oxygen and hydrogen peroxide in a circulation system of a boiling water type nuclear power plant, there is arranged a first electrode pair as earlier in the form of two platinum electrodes, a Pt-Pt electrode pair, whereas in the second electrode pair the platinum electrode is combined with an electrode of stainless steel, an SS electrode. The oxide film influences the reaction conditions, as a result of a diffusion limitation in the oxide film, during the oxygen gas reduction, whereby the electrochemical reactions of the oxygen gas and the hydrogen peroxide can be distinguished and the contents be determined by simultaneous measurement with the Pt-Pt electrode pair and the Pt-SS electrode pair.

By way of example, the invention will now be described in greater detail with reference to the accompanying drawings showing in
Figure 1 a primary circuit in a boiler type nuclear power plant,
Figure 2 a set of electrodes according to the invention,
Figure 3 a so-called Nyquist diagram.

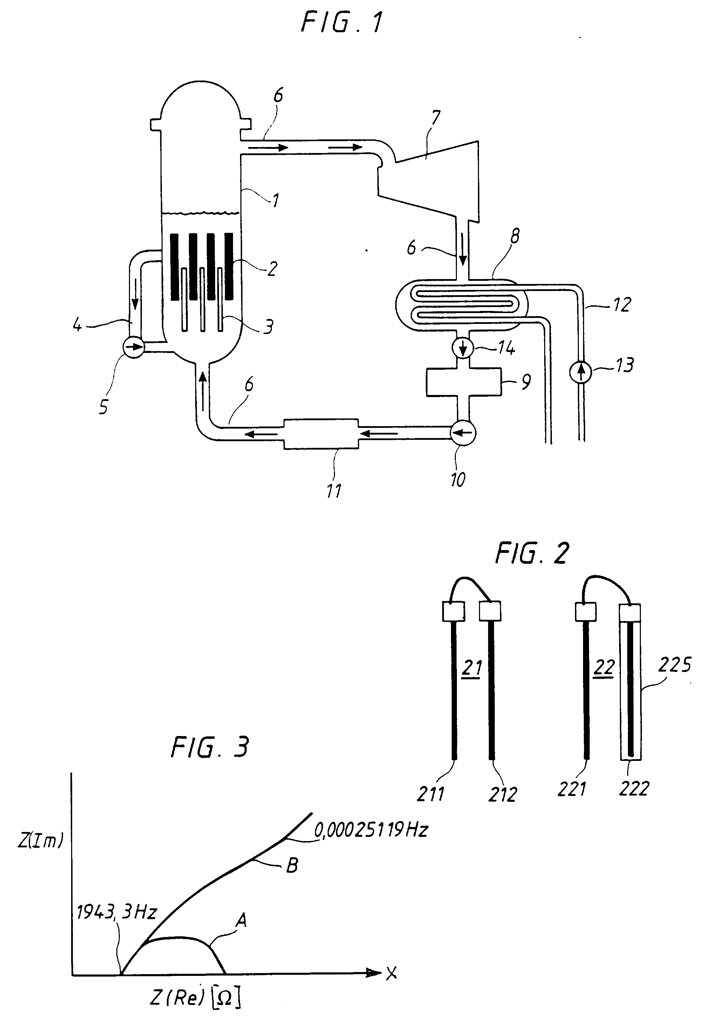

The boiling water reactor shown in Figure 1 has a reactor vessel 1 with fuel elements 2, control rods 3 and main circulation systems 4, one of which is shown in the figure. Each main circulation system 4 has a pump 5. It is the duty of the main circulation pumps 5 to provide sufficient cooling for the reactor core. The reactor vessel 1 is included in a water circulation system 6, which also comprises a steam turbine 7, a condenser 8, a condensate cleaning filter 9, pumps 10 and 14, and a preheater 11. Steam formed in the reactor core delivers its energy to the rotor of the turbine and is condensed after passage of the turbine in the condenser 8 by means of a cooling water circuit 12 comprising a pump 13. The condensate from the condenser 8 is transported by the condensate pump 14 through the condensate cleaning filter 9, and the condensate cleaned therein is fed, after preheating in preheater 11, into the reactor vessel by means of the feed pump 10.

According to the invention, contents of molecules arising and present in the water, such as hydrogen peroxide, oxygen, chloride, sulphate and organic acids, are monitored by means of electrochemical measuring methods, such as electrochemical impedance spectroscopy. The electrodes are then preferably arranged in the reactor vessel 1 or in the main circulation systems 4, in which the water temperature normally amounts to between 250 and 300°C.

In order simultaneously to monitor the contents of two of these molecules, in the following exemplified by hydrogen peroxide and oxygen, according to the invention two electrode pairs 21, 22 are used, which are shown in more details in Figure 2. The electrode pairs 21, 22 are chosen such that the sensitivity to the electrochemical reaction of the hydrogen peroxide, the hydrogen peroxide reduction, is essentially the same for both electrode pairs, whereas the sensitivity to the electrochemical reaction of the oxygen, the oxygen gas reduction, differs considerably between the two electrode pairs. This is achieved by arranging a first electrode pair 21 with two electrodes 211, 212 of inert metal, preferably in the form of two platinum electrodes, that is, a Pt-Pt electrode pair 21, whereas in the second electrode pair 22 an inert electrode 221, preferably a platinum electrode, cooperates with a coated electrode 222, the coating 225 of which is adapted to influence the reaction conditions for the oxygen gas reduction. By measurement according to this embodiment, also contents of other molecules, such as sulphate and chloride, can be determined at the same time by influencing the reaction conditions for the electrochemical reaction of one of the reactions by the coating 225.

The coating 225 is preferably a natural oxide film, or an oxide film accomplished by electrochemical methods, on an electrode of stainless steel or another metal. However, the coating can also be accomplished by means of surface coating operations such as CVD, Chemical Vapour Deposition, or PVD, Physical Vapour Deposition, for example an electrode of a platinum metal or another suitable metal can be coated with a layer of, for example, coal.

During impedance measurements in water using alternating current methods such as electrochemical impedance spectroscopy, EIS, and with a small excitation amplitude, it is possible, by varying the frequency,ω, to distinguish different sub-impedances caused by physical phenomena in the electrochemical reactions. Such sub-impedances are the pure impedance arising as a result of adsorption phenomena in the phase boundary between the electrode and the water, pure resistance arising because of low conductivity in the water, and the impedance which manifests itself in case of a diffusion-controlled reaction. The Nyquist diagram, the impedance diagram, in Figure 3 shows the imaginary component Z(Im) of the impedance Z plotted against the real component Z(Re) of the impedance Z for EIS measurements in the frequency range 0.0003 - 10 000 Hz with a first electrode pair consisting of two platinum electrodes, Pt-Pt, and a second electrode pair consisting of one electrode of stainless steel and one of platinum, Pt-SS, in high-purity water at 270°C and a content of approximately 400 ppb oxygen gas. For the Pt-Pt pair, the curve A is obtained, which intersects the x-axis at both low and high frequency and where the distance between the intersections with the x-axis provides a measure of the reaction resistance which is inversely proportional to the reaction velocity. Thus, the distance between the intersections of curve A with the x-axis provides a measure of the content of oxygen gas in the water. For the Pt-SS electrode, curve B, no intersection is obtained at low frequencies because of a diffusion limitation in the oxide film. When measuring hydrogen peroxide, also with one Pt-Pt electrode pair and one Pt-SS electrode pair, a curve is obtained similar to that for the Pt-Pt electrode, curve A, in the presence of oxygen gas for both electrode pairs.

During EIS measurements the above-mentioned information about the absolute value of the impedance and the phase displacement is obtained in a simple manner, whereby the quantitative evaluation becomes comparatively simple, but also considerably simpler electrochemical measuring arrangements may provide adequate information.

## Claims

1. A method for quantitative electrochemical in situ measurements in water at high temperature, in which at least two electrode pairs are arranged to simultaneously determine the contents of two molecules or ions, dissolved in the water, by means of an electrochemical measuring method starting from measurement of kinetics, adsorption or the diffusion behaviour of the molecules/ions in connection with electrochemical reactions on or adjacent to the metal electrodes, **characterized** in that the electrochemical reactions of said molecules/ions are distinguished by the following steps:
- arranging a first electrode pair (21) consisting of two metal electrodes of an inert metal (211, 212), preferably gold or platinum metal,
- arranging a second electrode pair (22) comprising an electrode of an inert metal (221) and a metal electrode (222) which is provided with a surface layer (225), and
- arranging said surface layer on the metal electrode in the second electrode pair to influence kinetics, adsorption, or the diffusion behaviour in connection with an electrochemical reaction of the second molecule/ion in such a way that the sensitivity to the reactions of the first molecule/ion is essentially the same for both electrode pairs, whereas the sensitivity to the reactions of the second molecule/ion differs considerably between the electrode pairs

2. A method according to claim 1, **characterized** in that low contents of hydrogen peroxide and oxygen dissolved in water of high temperature are determined by means of electrochemical impedance spectroscopy by means of:
- a first electrode pair (21) of platinum-platinum (Pt-Pt), and
- a second electrode pair (22) of platinum-stainless steel (Pt-SS), wherein
- the stainless electrode (222) is arranged with an oxide layer (225) to influence the reaction conditions during the oxygen gas reduction as a result of a diffusion limitation in the oxide film, and
- the sensitivity to the hydrogen peroxide reduction is essentially the same for both electrode pairs whereas the sensitivity to the oxygen gas reduction differs considerably for the electrode pair Pt-SS.

3. A device in connection with quantitative in situ electrochemical measurements in water at high temperature for distinguishing contents of two molecules/ions dissolved in the water, wherein at least two metal electrode pairs are adapted to determine the contents of the molecules/ions by means of an electrochemical measuring method starting from kinetics, adsorption or diffusion behaviour, **characterized** in that
- a first electrode pair (21) comprising two metal electrodes (211, 212) made of an inert metal, preferably gold or a platinum metal, and
- a second electrode pair (22) comprising a first electrode of inert metal (221) and a second electrode (222) in the form of a metal electrode provided with a surface layer (225), wherein
- said surface layer (225) is adapted to influence kinetics, adsorption or the diffusion behaviour in connection with an electrochemical reaction for one of the dissolved molecules/ions, and
- the sensitivity to the reactions of the first molecule/ion is essentially the same for both electrode pairs, whereas the sensitivity to the reactions of the second molecule/ion differs considerably between the electrode pairs.

4. A device according to claim 3, **characterized** in that at least two electrode pairs (21, 22), a platinum-platinum pair (Pt-Pt) and a platinum-stainless steel pair (Pt-SS), are arranged to determine low contents of hydrogen peroxide and oxygen dissolved in water of high temperature by means of electrochemical impedance spectroscopy, that the stainless electrode (222) in the electrode pair Pt-SS is arranged with an oxide layer (225) for influencing the reaction conditions during the oxygen gas reduction as a result of a diffusion limitation in the oxide layer, and that the sensitivity to the hydrogen peroxide reduction is essentially the same for both electrode pairs whereas the sensitivity to the oxygen gas reduction differs considerably for the electrode pair Pt-SS.

## Patentansprüche

1. Verfahren für quantitative elektrochemische Vor-Ort-Messungen in Wasser bei hohen Temperaturen, wobei mindestens zwei Elektrodenpaare zur gleichzeitigen Bestimmung der Gehalte von zwei Arten von im Wasser gelösten Molekülen oder Ionen angeordnet sind, durch elektrochemische Meßmethoden, die auf der Messung des kinetischen Verhaltens, des Adsorptionsverhaltens oder des Diffusionsverhaltens der Moleküle/Ionen in Verbindung mit elektrochemischen Reaktionen an oder nahe der Metallelektroden beruhen, **dadurch** **gekennzeichnet**, daß die elektrochemischen Reaktion der genannten Moleküle/Ionen durch folgende Schritte unterschieden werden:
- Anordnung eines ersten Elektrodenpaares (21), bestehend aus zwei Metallelektroden eines inerten Metalls (211, 212), vorzugsweise Gold oder Platin,
- Anordnung eines zweiten Elektrodenpaares (22), bestehend aus einer Elektrode aus einem inerten Material (221) und einer Metallelektrode (222), die mit einer Oberflächenschicht (225) versehen ist, und
- Anordnung der Oberflächenschicht auf der Metallelektrode des zweiten Elektrodenpaares zur Beeinflussung des kinetischen Verhaltens, des Adsorptionsverhaltens oder des Diffusionsverhaltens in Verbindung mit einer elektrochemischen Reaktion der zweiten Art von Molekülen oder Ionen in solcher Weise, daß die Empfindlichkeit gegenüber den Reaktionen der ersten Art von Molekülen/Ionen im wesentlichen für beide Elektrodenpaare gleich ist, während die Empfindlichkeit gegenüber den Reaktionen der zweiten Art von Molekülen/Ionen sehr unterschiedlich für die beiden Elektrodenpaare ist.

2. Verfahren nach Anspruch 1, **dadurch gekennzeichnet** , daß geringe Gehalte an Wasserstoffperoxid und Sauerstoff, die im Wasser hoher Temperatur gelöst sind, mittels elektrochemischer Impedanzspektroskopie bestimmt werden durch:
- ein erstes Elektrodenpaar (21) aus Platin-Platin (Pt-Pt) und
- ein zweites Elektrodenpaar (22) aus Platin-rostfreiem Stahl (Pt-SS), wobei
- die Elektrode 222 aus rostfreiem Stahl mit einer Oxydschicht 225 versehen ist, um die Reaktionsbedingungen während der Sauerstoffreduktion zu beeinflussen als Folge einer Diffusionsbegrenzung im Oxydfilm und
- die Empfindlichkeit der Wasserstoffperoxidreduktion im wesentlichen für beide Elektrodenpaare gleich ist, während die Empfindlichkeit gegenüber der Sauerstoffreduktion für das Elektrodenpaares Pt-SS stark abweicht.

3. Anordnung in Verbindung mit quantitativen elektrochemischen Vor-Ort-Messungen in Wasser bei hohen Temperaturen zur Unterscheidung der Gehalte von zwei Arten von im Wasser gelösten Molekülen/Ionen, wobei mindestens zwei Metallelektrodenpaare vorhanden sind, die imstande sind, die Gehalte der Moleküle/Ione mit Hilfe eines elektrochemischen Meßverfahrens zu unterscheiden, welches auf dem kinetischen Verhalten, dem Adsorptionsverhalten oder dem Diffusionsverhalten beruht, **dadurch gekennzeichnet**, daß
- ein erstes Elektrodenpaar (21) vorhanden ist, welches zwei Elektroden (211, 212) aus inertem Metall enthält, vorzugsweise Gold oder Platin, und
- ein zweites Elektrodenpaar (22) vorhanden ist, welches eine erste Elektrode aus inertem Metall (221) und eine zweite Elektrode (222) in Form einer Metallelektrode enthält, die mit einer Oberflächenschicht (225) versehen ist, wobei
- die genannte Oberflächenschicht (225) imstande ist, das kinetischen Verhalten, das Adsorptionsverhalten oder das Diffusionsverhalten in Verbindung mit einer elektrochemischen Reaktion für eine Art der gelösten Molekülen/Ionen zu beeinflussen, und
- die Empfindlichkeit gegenüber den Reaktionen der ersten Art von Molekülen/Ionen im wesentlichen für beide Elektrodenpaare gleich ist, während die Empfindlichkeit gegenüber den Reaktionen der zweiten Art von Molekülen/Ionen für beide Elektrodenpaare sehr unterschiedlich ist.

4. Anspruch nach Anspruch 3, **dadurch gekennzeichnet** , daß mindestens zwei Elektrodenpaar (21, 22), ein Platin-Platin-Paare (Pt-Pt) und ein Platin-rostfreier-Stahl-Paar (Pt-SS), angeordnet sind zur Bestimmung niedriger Gehalte von Wasserstoffperoxid und Sauerstoff, welche in Wasser hoher Temperatur gelöst sind, mittels elektrochemischer Impedanzspektroskopie,
daß die rostfreie Elektrode (222) des Pt-SS-Elektrodenpaares mit einer Oxydschicht (225) versehen ist zur Beeinflussung der Reaktionsbedingungenen während der Sauerstoffreduktion als Folge einer Diffusionsbegrenzung in der Oxydschicht,
und daß die Empfindlichkeit gegenüber der Wasserstoffperoxidreduktion für beide Elektrodenpaare im wesentlichen gleich groß ist, während die Empfindlichkeit gegenüber der Sauerstoffreduktion für das Elektrodenpaar Pt-SS stark abweicht.

## Revendications

1. Procédé de mesures électrochimiques quantitatives in situ dans l'eau à haute température, dans lequel au moins deux paires d'électrodes sont disposées de manière à déterminer simultanément la teneur en deux molécules ou ions dissous dans l'eau, au moyen d'un procédé de mesure électrochimique débutant par des mesures des comportements cinétiques, d'absorption ou de diffusion des molécules/ions vis-à-vis des réactions électrochimiques sur ou au voisinage des électrodes métalliques, caractérisé en ce que les réactions électrochimiques des molécules/ions sont distinguées par les étapes suivantes :
- on dispose une première paire (21) d'électrodes consistant de deux électrodes métalliques en un métal (211, 212) amorphe, de préférence de l'or ou du platine,
- on dispose une seconde paire (22) d'électrodes comprenant une électrode d'un métal (221) amorphe et une électrode (222) métallique qui est munie d'une couche (225) de surface, et
- on dispose cette couche de surface sur l'électrode métallique de la seconde paire d'électrodes pour exercer une action sur le comportement cinétique, d'absorption ou de diffusion vis-à- vis d'une réaction électrochimique du second ion/molécule d'une manière telle que la sensibilité aux réactions du premier ion/molécule est sensiblement la même pour les deux paires d'électrodes, tandis que la sensibilité aux réactions du second ion/molécule varie considérablement suivant la paire d'électrodes.

2. Procédé suivant la revendication 1, caractérisé en ce que des teneurs faibles en peroxyde d'hydrogène et oxygène dissous dans l'eau à haute température sont déterminées par spectroscopie d'impédance électrochimique au moyen de :
- une première paire (21) d'électrodes de platine-platine (Pt-Pt), et
- une seconde paire (22) d'électrodes de platine-acier inoxydable (Pt-SS), dans laquelle
- l'électrode (222) inoxydable est munie d'une couche (225) d'oxyde destinée à exercer une action sur les conditions de réaction lors de la réduction de l'oxygène résultant d'une limitation de la diffusion dans la pellicule d'oxyde, et
- la sensibilité à la réduction du peroxyde d'hydrogène est sensiblement la même pour les deux paires d'électrodes tandis que la sensibilité à la réduction de l'oxygène gazeux varie considérablement pour la paire d'électrodes Pt-SS.

3. Dispositif se rapportant à des mesures électrochimiques quantitatives in situ dans de l'eau à haute température, afin de distinguer des teneurs en deux ions/molécules dissous dans l'eau, dans lequel au moins deux paires d'électrodes métalliques sont adaptées de manière à déterminer les teneurs en ions/molécules au moyen d'un procédé de mesure électrochimique débutant par le comportement cinétique d'absorption ou de diffusion, caractérisé par
- une première paire (21) d'électrodes comprenant deux électrodes (211, 212) métalliques en un métal amorphe, de préférence de l'or ou du platine, et
- une seconde paire (22) d'électrodes comprenant une première électrode en métal (221) amorphe et une seconde électrode (222) sous la forme d'une électrode métallique munie d'une couche (225) de surface, dans laquelle
- la couche (225) de surface est adaptée pour exercer une action sur les comportements cinétique, d'absorption ou de diffusion se rapportant à une réaction électrochimique pour l'un des ions/molécules dissous, et
- la sensibilité aux réactions du premier ion/molécule est sensiblement la même pour les deux paires d'électrodes tandis que la sensibilité aux réactions pour le second ion/molécule varie considérablement suivant la paire d'électrodes.

4. Dispositif suivant la revendication 3, caractérisé en ce que au moins deux paires (21, 22) d'électrodes, une paire platine-platine (Pt-Pt) et une paire platine-acier inoxydable (Pt-SS) sont prévues pour déterminer des faibles teneurs en peroxyde d'hydrogène et en oxygène dissous dans de l'eau à haute température au moyen d'une spectroscopie à impédance électrochimique, en ce que l'électrode (222) inoxydable de la paire d'électrodes (Pt-SS) est munie d'une couche (225) d'oxyde pour exercer une action sur les conditions de réaction pendant la réaction de réduction de l'oxygène gazeux résultant d'une limitation de diffusion dans la couche d'oxyde et en ce que la sensibilité à la réaction de réduction du peroxyde d'hydrogène est sensiblement la même pour les deux paires d'électrodes tandis que la sensibilité à la réaction de réduction de l'oxygène gazeux varie considérablement selon la paire d'électrodes (Pt-SS).
